# EUROPEAN PATENT SPECIFICATION

(11) **EP 4 040 976 B1**
(45) Date of publication and mention of the grant of the patent: **12.02.2025**
(21) Application number: 20889904.7
(22) Date of filing: 26.06.2020
(51) Int. Cl.: A23G 3/00, A23G 3/20, A23G 3/52, A23P 20/15

(54) **CONFECTIONERY PRODUCT COATING ASSEMBLY**
ÜBERZUGSANORDNUNG FÜR SÜSSWAREN
ENSEMBLE DE REVÊTEMENT DE PRODUIT DE CONFISERIE

(30) Priority: 20.11.2019 TR 201918144
(43) Date of publication of application: 17.08.2022
(73) Proprietor: Solen Cikolata Gida Sanayi Ve Ticaret Anonim Sirketi, Istanbul (TR)
(72) Inventor: COBAN, Erdogan, Bagcilar/Istanbul (TR)
(74) Representative: Atalay, Baris
(86) International application number: PCT/TR2020/050549
(87) International publication number: WO 2021/101476

(56) References cited:
- EP-A2- 0 411 174
- WO-A1-2019/132656
- WO-A1-95/15699
- GB-A- 191 128 069
- GB-A- 700 962
- GB-A- 700 962
- US-A- 1 121 431
- US-A- 1 230 455
- US-A- 2 696 793
- US-A- 2 696 793

## Description

### TECHNICAL FIELD

The present invention relates to a coating assembly for manufacturing of the confectionery products, in particular aerated edible products, e.g. marshmallow coating apparatus with a spout.

### PRIOR ART

Aerated confectionery products, particularly marshmallow is used as an intermediate layer between two layers of cake or biscuit sandwich. The sandwich form is obtained by injection of the marshmallow in a predefined amount above the first layer defining a base; stay until spreading and expanding by its own weight, subsequently dispose of a second layer forming a header over the marshmallow layer by means of a headerper.

The products known as Snoball^{®}, at the other hand, are obtained by marshmallow covering at the top of a piece of cake and were marketed as a marshmallow covered product. This product is produced by pouring a cover sheet at the same width of the conveyor while the baked cakes move on the conveyor and coating with the corresponding portion of the cover to the top of the cakes. Air jets extending towards the conveyor cut the marshmallow layer from outside of the cakes and remove the sections which extend between the cakes from the conveyor belt as waste. This production method allows the production of cupcakes covered with a marshmallow layer. However, the production costs are high due to the excess waste product.

TR201915738 utility model publication discloses a confectionery product comprising a marshmallow cover and a filling that at least partially fills the inside of the marshmallow coating. The confectionery product contains an open mouth cavity in which the filling is disposed inside the marshmallow cover; however, it does not contain a coating layer covering the mouth of the cavity is not comprised. In this way, the filling is secured inside the marshmallow coating. Shelf stability of the inner filling of the confectionery product is increased by means of the protective effect of the marshmallow.

Further examples of apparatuses for depositing coating materials onto confectionary products can be found in GB700962, US2696793 and US1230455.

GB 700 962 A discloses a method and an apparatus for depositing marshmallow, dough, batters and the like. There is provided a depositor comprising a depositing head for depositing flowable material on articles carried by a continuously movable conveyor, valve and including a tubular manifold member provided with a number of depositing nozzles. Each nozzle has a downwardly extending tubular portion and an inclined central passage, which can be brought into or out of the alignment with its corresponding opening. The material is deposited onto the confectionary goods via the nozzles of the depositing manifold. For deposition, openings and the inlet of passage need to be aligned. This can be achieved by rotating the nozzle in order to control deposition of material. The passage is only described as having an inclined structure and no further detail is disclosed.

### BRIEF DESCRIPTION OF THE INVENTION

The present invention is defined by the claims.

The object of the invention is to ensure continuous and rapid supply of an aerated edible cover over a confectionery product.

To achieve the aforementioned objective, invention relates to a coating assembly comprising an endless transport conveyor and a header provided over a line of confectionery product in bar form moving on the conveyor one after another and surrounding an inner chamber having an outlet through which a pressurized aerated semi-fluid edible coating material is transferred. The coating material further comprises a spout adapted to the outlet and extending inwardly against the conveyor such that the discharged coating material is surrounding at least partly the outer side of each confectionery product. The bending of the spout against the conveyor form a path allowing the pressurized and expandable coating material to follow and flow both from the top and sides to wrap the confectionery product moving on the conveyor. The cross- sectional area of the outlet can be adjusted to lead a pressure by its own weight of the aerated coating material inside volume set at the inner chamber or the material can be transferred from a container to the inner chamber with an initial pressure provided by a pump.

According to the invention, an upper part is disposed of on the spout at a distance to confine a closed duct suitable for transferring the coating material and covering an inlet port adapted to the outlet in a sealed manner and a discharge aperture at the opposing free end. The spout forms a nozzle when the upper part is mounted. The closed duct helps to transfer the coating material onto the product with minimal exposure to the outside environment. In a possible embodiment, the upper part may be in a separate structure with the spout or it is formed as a single part as in the preferred embodiment.

According to the invention, the cross-sectional area of the outlet is adjusted to be smaller than the cross-section area of the inlet port. The coating material fills the inner chamber by completely encompassing the transport medium, i.e. the duct by creating a low pressure area at the inlet port while leaving the inner chamber of the nozzle with an initial pressure. The risk of an air bubble remaining in the coating material is eliminated by completely filling inside the duct.

According to the invention, the duct is having a form expanding outwardly from the inlet port to the discharge aperture. This ensures that the pressure of the aerated coating material continues to decrease during movement and completely covers the inner wall of the duct even at a high forward speed and flow rate. Since the duct is completely filled with coating material, the coating material supplied on the product has equal thickness. In a possible embodiment, the duct height is kept constant despite the expanding cross-section, therefore the coating material reaches the duct thickness by means of dropping pressure.

In a preferred embodiment of the invention, a duct has an inverted U-like cross-sectional form. The coating material discharged from the duct has a U-like shape and transferred over the confectionery product in bar form on the conveyor and the confectionery product rest inside the inner area of the U-form such that completely wrapped by the coating material from the outer walls except for the base which rest over the conveyor.

In a preferred embodiment of the invention, a narrow bending angle is provided at the discharge aperture against the transport conveyor transfer axis. The bending angle brings the coating material closer to the conveyor and allows it to pour over to a portion close to the confectionery product, thereby forming a homogeneous coating structure.

In a preferred embodiment of the invention, the upper part is having a flat upper wall which is provided at the upper part of the duct. With the upper part being flat, the duct reaches the discharge aperture by correcting the coating material from the top. In this case, the confectionery product in the form of a bar is covered flat along its upper edge.

In a preferred embodiment of the invention, the header is having an inlet accessing the inner chamber and at least one narrowed port through which the compressed coating material is forced to move under pressure and accessing to the outlet from an end. The narrowed port accessing the outlet sets the initial pressure to the maximum level on the narrowed port due to the compression at the inner chamber and subsequently the pressure is lowered during the movement to the outlet which allows the outlet to be completely filled by the coating material and prevents any air bubbles to arise.

In a preferred embodiment, an expansion chamber is extending between the narrowed port and the outlet in an expanding manner. The expansion chamber allows all air bubbles remaining in the pressurized material in the inner chamber to be eliminated during expansion.

In a preferred embodiment of the invention, the width of the spout is at most 1% to 10% larger than the width of each confectionery product. In this case, the ventilated coating material ensures accumulation on the confectionery product, allowing it to form a layer after flowing onto the bar-shaped confectionery product. In a preferred embodiment of the invention, the spout is completely made of metal, secured with a welding seam with the header. This prevents the spout from forming any interconnection gap and forming air bubbles in the material in flow or vortex formation in the inner structure of the material.

In a preferred embodiment of the invention, the spout extends towards the plane of the conveyor at an angle. It is possible to obtain a laminar flow with the coating material by removing the imbalances that occur in the internal structure due to the pressure with the angled extension of the spout.

### BRIEF DESCRIPTION OF THE FIGURES

Figure 1 is a side schematic view of a coating apparatus according to the subject matter invention utilized in the production of a bar-shaped confectionery product with a marshmallow coating.
Figure 2 is a side view of a representative embodiment of the nozzle provided at the end of the coating apparatus.
Figure 3 is a perspective view of the nozzle provided with the inverse U-shaped coating given in Figure 2 with the flow ducts.

### DETAILED DESCRIPTION OF THE INVENTION

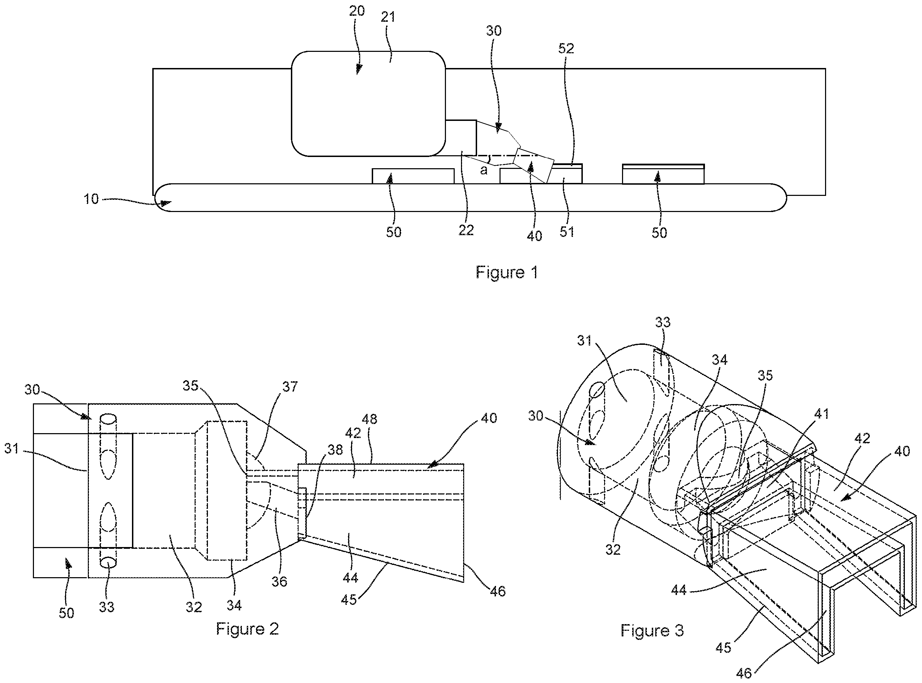

In Figure 1, a coating apparatus used to coat marshmallow as a coating material (not shown) on a bar-shaped confectionery product (50) is shown schematically from the front. The coating apparatus comprises an endless transport conveyor (10) and a product supply device (20) disposed of on transfer line thereof. The product supply device (20) comprises a metal container (21) in accordance with the alimentary products regulations and a pump (22) provided underneath allowing the flow of coating material. Marshmallow is stored as a coating material in the container (21). In a possible embodiment, the container (21) is in a structure in which marshmallow is produced by mixing with a high-shear mixer and ventilating the components necessary for preparing marshmallows. The pump (22) continuously supplies the coating material to a header (30) in a pressurized state during operation. The header (30) transmits compressed and subsequently slightly expanded coating material to a nozzle (40) with a spout (44) secured at its end. The nozzle (40) extends to the transport conveyor (10) with a bending angle with respect to the direction of movement of the transport conveyor (10). The nozzle (40) is parallel to the confectionery product (50) transfer line. There is a distance between the lower end of the nozzle (40) and an elongated body (51) of the confectionery product (50). Thus, the coating material poured from the nozzle (40) is secured on the elongated body (51) to form a coating layer (52). The elongated body (51) has a cake structure and the porous structure on the outer wall of the cake helps the marshmallow, the coating material, to hold onto the elongated body (51).

In Figure 2, the header (30) equipped in the coating assembly and the nozzle (40) secured to the header (30) are shown from a cross-sectional view. The header (30) portion is in the form of a hollow cylinder of metal material, preferably stainless steel. An inlet part (31) of the header (30) is in a circular form cut-out at one end, and in the following an inner chamber (32) with a cylindrical gap of the same diameter extends coaxially. An adaptor hole (33) passes through the inner chamber (32) in the form of a through-hole in the radial outward direction, close to the inlet (31). At the opposite end of the inner chamber (32) opposite the inlet (31), there is a wide portion (34) with a larger diameter than the inlet (31 ). The end of the wide portion (34) is blind and in the middle, there is a narrowed port (35) in the form of a transverse slit. There is an outwardly curved dome (37) form around the narrowed port (35). The narrowed port (35) opens into the expansion chamber (36), the upper part of which is flat and the lower part of which is a rectangular trapezoidal gap that expands downward. The outer end of the expansion chamber (36) reaches an outlet (38) of the header. At the end of the header (30) carrying the outlet (38), the facing surfaces are narrowed towards the end with a curved flat form. A spout (44) part of the nozzle (40), which is aligned at the lower edge of the outlet (38), is secured around the outlet (38) by welding seal. An inlet port (41) of the nozzle (40) rests on the outlet (38) to provide fluid transmission with the narrowed port (35). An upper part (42), which is in the form of a flat plate and secured along one edge to the upper edge of the outlet (38), forms a duct (45) between them by covering the spout (44) from above. The spout (44) is double- walled and open-top inverted U-shaped and the duct (45) formed when it is covered with the upper part (42) is connected to the outlet (38) to provide fluid transmission from an inverted U- shaped inlet port (41). The spout (44) is in the form of a co-section which is narrow at the inlet port (41) and wide at an opposite discharge aperture (46). Thus, in the nozzle (40) where the upper part (42) is placed flat parallel to the extending axis of the inner chamber (32), the side extends outward in the form of a vertical trapezoid with a short edge at the inlet port (41).

In Figure 3, the header (30) and nozzle (40) used in the coating apparatus are shown in perspective. The inlet (31) carries the pressurized coating product from the container (21) to the inner chamber (32) with the help of the pump (22). The coating product, which moves to the wide portion (34) in the inner chamber (32) and is trapped at its blind end, accelerates through the narrowed port (35) and passes to the expansion chamber (36). Meanwhile, the fluid aerated coating product tends to fill the expanded part by moving radially outward as it is axially in a turbulent manner due to pressure loss. Air balloons remaining in the coating product are removed from the narrowed port (35) during the expansion. As the dome (37) wraps around the narrowed port, it was found that the covering product covers the expansion chamber (36) without any dead part as the radial outflow rate increases. The coating product that reaches the free end of the outlet (38) from the expansion chamber (36) is transferred to the confectionery product (50) by taking the opposite U-like form at the nozzle (40). The coating product moves from the narrow inlet port (41) towards the wide discharge aperture (46) with decreasing axial speed. Meanwhile, the marshmallow coating product moves along both the upper part and the legs of the U-form and fills the entire duct (45) that formed between them. As seen in Figure 1, the bar-shaped elongated body (51) (in the form of cake or sandwich cake) adheres to the side walls and upper wall and slowly settling while the inverted U-shaped marshmallow coating product at the end of the angled header (30) passes underneath, with the inclination angle (a) and the direction of conveyor moving direction. A flap (not shown) disposed in the inlet (31), provides when the coating layer (52) is formed along the length of each elongated body (51), the product is transferred from the product supply apparatus (20) to the header (30) in the open state and cuts off the inlet (31) completely when the product is finished. A nozzle (40) is provided for each axial line of the elongated body (51) on the transport conveyor (10). Each nozzle (40) is equipped with a separate header (30). Headers (30) are fed in the product supply apparatus (20) with a single supply tube (not shown) to which the container (21) is connected to provide fluid transmission.

**REFERENCE NUMBERS**

| | | | |
|---|---|---|---|
| 10 | Transport conveyor | 38 | Outlet |
| 20 | Product supply apparatus | 40 | Nozzle |
| 21 | Container | 41 | Inlet port |
| 22 | Pump | 42 | Upper part |
| 30 | Header | 44 | Spout |
| 31 | Inlet | 45 | Duct |
| 32 | Inner chamber | 46 | Discharge aperture |
| 33 | Adaptor hole | 48 | Upper wall |
| 34 | Wide portion | 50 | Confectionery product |
| 35 | Narrowed port | 51 | Elongated body |
| 36 | Expansion chamber | 52 | Coating layer |
| 37 | Dome | | |
| a | Slope angle | | |

## Claims

1. A coating assembly comprising an endless transport conveyor (10) and a header (30) provided over a line of confectionery product (50) in bar form moving on the conveyor (10) one after another and is confining an inner chamber (32) having an outlet (38) through which a pressurized aerated semi-fluid edible coating material is transferred **characterized in that** a spout (44) is adapted to the outlet (38) and extending inwardly against line of the conveyor (10) such that the discharged coating material is surrounding at least partly the outer side of each confectionery product (50),
an upper part (42) is disposed on the spout (44) at a distance to confine a closed duct (45) suitable for transferring the coating material and covering an inlet port (41) adapted to the outlet (38) in a sealed manner and a discharge aperture (46) at the opposing free end,
the cross-section area of the outlet (38) is adjusted smaller than the cross-section area of the inlet port (41), and
the duct (45) is having a form expanding outwardly from the inlet port (41) to the discharge aperture (46).

2. A coating assembly according to claim 1, wherein a duct (45) has an inverted U-like cross-sectional form.

3. A coating apparatus according to claim 2, wherein a narrow bending angle is provided at the discharge aperture (46) against the transport conveyor (10) transfer axis.

4. A coating apparatus according to claim 2 or 3, wherein the upper part (42) is having a flat upper wall (48) which is provided at the upper part of the duct (45).

5. A coating apparatus according to any one of the preceding claims, the header (30) is having an inlet (31) accessing the inner chamber (32) and at least one narrowed port (35) through which the compressed coating material is forced to move under pressure and accessing to the outlet (38) from an end.

6. A coating apparatus according to claim 5, wherein an expansion chamber (36) is extending between the narrowed port (35) and the outlet (38) in an expanding manner.

7. A coating apparatus according to any one of the preceding claims, wherein the width of the spout (44) is at most 1% to 10% larger than the width of each confectionery product.

8. A coating apparatus according to any one of the preceding claims, wherein the spout (44) is completely made of metal secured to the header (30) by means of with a welding seam.

9. A coating apparatus according to any one of the preceding claims, wherein the spout (44) extends towards the plane of the conveyor (10) at an angle.

## Patentansprüche

1. Beschichtungsvorrichtung mit einem Endlostransportförderer (10) und einem Kopfstück (30), die über einer Reihe von sich nacheinander auf dem Förderer (10) bewegenden Süßwarenprodukten (50) in Stangenform vorgesehen ist, und die eine innere Kammer (32) mit einem Auslass (38) einschließt, durch den ein unter Druck stehendes, belüftetes, halbflüssiges, essbares Beschichtungsmaterial übertragen wird, **dadurch gekennzeichnet, dass** ein Ausguss (44) an den Auslass (38) angepasst ist und sich nach innen gegen die Linie des Förderers (10) erstreckt, so dass das abgegebene Beschichtungsmaterial zumindest teilweise die Außenseite jedes Süßwarenprodukts (50) umgibt,
ein oberer Teil (42) auf dem Ausguss (44) in einem Abstand angeordnet ist, um einen geschlossenen Kanal (45) zu begrenzen, der für die Übertagung des Beschichtungsmaterials geeignet ist und abdichtend eine an den Auslass (38) angepasste Einlassöffnung (41) und eine Auslassöffnung (46) am gegenüberliegenden freien Ende abdeckt,
die Querschnittsfläche des Auslasses (38) kleiner als die Querschnittfläche der Einlassöffnung (41) eingestellt ist, und
der Kanal (45) eine Form aufweist, die sich von der Einlassöffnung (41) bis Auslassöffnung (46) nach außen hin erweitert.

2. Beschichtungsvorrichtung nach Anspruch 1, wobei ein Kanal (45) eine umgekehrte U-ähnliche Querschnittsform aufweist.

3. Beschichtungsvorrichtung nach Anspruch 2, wobei an der Auslassöffnung (46) ein enger Biegewinkel zur Transferachse des Transportförderers (10) vorgesehen ist.

4. Beschichtungsvorrichtung nach Anspruch 2 oder 3, wobei der obere Teil (42) eine flache obere Wand (48) aufweist, die am oberen Teil des Kanals (45) vorgesehen ist.

5. Beschichtungsvorrichtung nach irgendeinem der vorhergehenden Ansprüche, wobei das Kopfstück (30) einen in den Innenraum (32) mündenden Einlass (31) und mindestens eine verengte Öffnung (35) aufweist durch die sich das komprimierte Beschichtungsmaterial unter Druck bewegen muss und von einem Ende aus zum Auslass (38) gelangt.

6. Beschichtungsvorrichtung nach Anspruch 5, wobei sich zwischen der verengten Öffnung (35) und dem Auslass (38) eine Expansionskammer (36) aufweitend erstreckt.

7. Beschichtungsvorrichtung nach irgendeinem der vorhergehenden Ansprüche, wobei die Breite des Ausgusses (44) höchstens 1 % bis 10 % größer ist als die Breite jedes Süßwarenprodukts.

8. Beschichtungsvorrichtung nach irgendeinem der vorhergehenden Ansprüche, wobei der Ausguss (44) vollständig aus Metall besteht und mit einer Schweißnaht am Kopfstück (30) befestigt ist.

9. Beschichtungsvorrichtung nach irgendeinem der vorhergehenden Ansprüche, wobei sich die Ausguss (44) in einem Winkel zur Ebene des Förderers (10) erstreckt.

## Revendications

1. Appareil d'enrobage comprenant un convoyeur de transport sans fin (10) et une tête (30) placée au-dessus d'une ligne de produits de confiserie (50) sous forme de barres se déplaçant sur le convoyeur (10) l'une après l'autre, et enfermant une chambre intérieure (32) ayant une sortie (38) par laquelle un matériau d'enrobage comestible semi-fluide aéré sous pression est transféré, **caractérisé en ce qu'**un bec (44) est adapté à la sortie (38) et s'étend vers l'intérieur contre la ligne du convoyeur (10) de sorte que le matériau d'enrobage déchargé entoure au moins partiellement le côté extérieur de chaque produit de confiserie (50),
une partie supérieure (42) est disposée sur le bec (44) à une distance permettant de confiner un conduit (45) fermé adapté au transfert du matériau d'enrobage et couvrant un orifice d'entrée (41) adapté à la sortie (38) de manière étanche et une ouverture d'évacuation (46) à l'extrémité libre opposée,
la surface de la section transversale de la sortie (38) est ajustée plus petite que la surface de la section transversale de l'orifice d'entrée (41), et
le conduit (45) a une forme qui s'étend vers l'extérieur depuis l'orifice d'entrée (41) jusqu'à l'ouverture d'évacuation (46).

2. Appareil d'enrobage selon la revendication 1, dans lequel un conduit (45) a une forme de section transversale en U inversé.

3. Appareil d'enrobage selon la revendication 2, dans lequel un angle de flexion étroit est prévu à l'ouverture d'évacuation (46) contre l'axe du convoyeur de transport (10).

4. Appareil d'enrobage selon la revendication 2 ou 3, dans lequel la partie supérieure (42) a une paroi supérieure plate (48) qui est prévue à la partie supérieure du conduit (45).

5. Appareil d'enrobage selon l'une quelconque des revendications précédentes, dans lequel la tête (30) a une entrée (31) accédant à la chambre intérieure (32) et au moins un orifice rétréci (35) par lequel le matériau d'enrobage comprimé est forcé de se déplacer sous pression et accéder à la sortie (38) par une extrémité.

6. Appareil d'enrobage selon la revendication 5, dans lequel une chambre d'expansion (36) s'étend entre l'orifice rétréci (35) et la sortie (38) d'une manière expansive.

7. Appareil d'enrobage selon l'une quelconque des revendications précédentes, dans lequel la largeur du bec (44) est au maximum de 1% à 10% plus grande que la largeur de chaque produit de confiserie.

8. Appareil d'enrobage selon l'une quelconque des revendications précédentes, dans lequel le bec (44) est entièrement en métal fixé à la tête (30) au moyen d'une soudure.

9. Appareil d'enrobage selon l'une quelconque des revendications précédentes, dans lequel le bec (44) s'étend vers le plan du convoyeur (10) à un angle.
